# EUROPEAN PATENT SPECIFICATION

(11) **EP 3 944 628 B1**
(45) Date of publication and mention of the grant of the patent: **21.10.2026**
(21) Application number: 20772993.0
(22) Date of filing: 11.03.2020
(51) Int. Cl.: H04N 23/60, H04N 23/90

(54) **CAMERA ANALYZING IMAGES ON BASIS OF ARTIFICIAL INTELLIGENCE, AND OPERATING METHOD THEREFOR**
KAMERA ZUR ANALYSE VON BILDERN AUF DER GRUNDLAGE VON KÜNSTLICHER INTELLIGENZ UND BETRIEBSVERFAHREN DAFÜR
CAMÉRA ANALYSANT DES IMAGES SUR LA BASE D'UNE INTELLIGENCE ARTIFICIELLE, ET SON PROCÉDÉ DE FONCTIONNEMENT

(30) Priority: 18.03.2019 KR 20190030457; 10.03.2020 KR 20200029565
(43) Date of publication of application: 26.01.2022
(73) Proprietor: Hanwha Vision Co., Ltd., Seongnam-si, Gyeonggi-do 13488 (KR)
(72) Inventor: KIM, Hyun Ho, Seongnam-Si Gyeonggi-do 13488 (KR); CHOI, Jinhyuk, Seongnam-Si Gyeonggi-do 13488 (KR); KIM, Daebong, Seongnam-Si Gyeonggi-do 13488 (KR); BYUN, Jaewoon, Seongnam-Si Gyeonggi-do 13488 (KR); LEE, Sangwook, Seongnam-Si Gyeonggi-do 13488 (KR); KIM, Junsik, Seongnam-Si Gyeonggi-do 13488 (KR); JEONG, Kyoungjeon, Seongnam-Si Gyeonggi-do 13488 (KR); KIM, Eunyoung, Seongnam-Si Gyeonggi-do 13488 (KR)
(74) Representative: Gulde & Partner
(86) International application number: PCT/KR2020/003391
(87) International publication number: WO 2020/189953

(56) References cited:
- KR-B1- 100 954 375
- KR-B1- 101 302 803
- KR-B1- 101 734 320
- US-A1- 2006 098 729
- US-A1- 2013 040 576
- BERNHARD DIEBER ET AL: "PhD forum: Flexible clustering in smart camera networks", 2009 THIRD ACM/IEEE INTERNATIONAL CONFERENCE ON DISTRIBUTED SMART CAMERAS (ICDSC), IEEE, PISCATAWAY, NJ, USA, 30 August 2009 (2009-08-30), pages 1 - 2, XP031548093, ISBN: 978-1-4244-4620-9
- BERNHARD DIEBER ET AL: "Flexible clustering in networks of smart cameras", 2009 IEEE 12TH INTERNATIONAL CONFERENCE ON COMPUTER VISION WORKSHOPS, ICCV WORKSHOPS : KYOTO, JAPAN, 27 SEPTEMBER - 4 OCTOBER 2009, INSTITUTE OF ELECTRICAL AND ELECTRONICS ENGINEERS, PISCATAWAY, NJ, 27 September 2009 (2009-09-27), pages 834 - 839, XP031664630, ISBN: 978-1-4244-4442-7

## Description

### [Technical Field]

The present disclosure relates to a camera capable of capturing an image, and an operating method therefor, and more particularly, to a camera analyzing an image on the basis of artificial intelligence, and an operating method therefor.

### [Background Art]

In an image capturing system including cameras connected to an external apparatus through a communication network, the cameras perform communication with an external apparatus such as a host device and a user terminal, but may also perform communication with each other in a peer-to-peer (P2P) manner. Nevertheless, conventionally, the cameras have mainly used manners of communicating with the external apparatus to provide a service. In this case, communication between the cameras is generally not performed, such that each of the cameras may operate individually.

BERNHARD DIEBER ET AL; "PhD forum: Flexible clustering in smart camera networks"", 2009 THIRD ACM/IEEE INTERNATIONAL CONFERENCE ON DISTRIBUTED SMART CAMERAS (ICDSC), IEEE, PISCATAWAY, NJ, USA, 30 August 2009 (2009-08-30), pages 1-2, XP031548093, ISBN: 978-1-4244-4620-9, discloses a clustered camera network comprising smart and conventional cameras. Furthermore, BERNHARD DIEBER ET AL discloses how to cluster cameras for background subtraction, objection detection and multi-view person tracking.

Meanwhile, cameras including an artificial intelligence function have been developed. An artificial intelligence technology consists of deep learning (machine learning) and elemental technologies using the deep learning. The deep learning is an algorithm that categorizes/learns features of input data by itself, and the elemental technology is a technology that simulates functions such as cognition and judgment of a human brain using the deep learning and may include technologies such as visual understanding, inference/prediction, and knowledge representation. The visual understanding is a technology that recognizes and processes things like human vision, and may include object recognition, object tracking, image search, human recognition, scene understanding, space understanding, image improvement, and the like. The inference/prediction is a technology that performs logical inference and prediction by judging information, and may include knowledge/probability-based inference, optimization prediction, preference-based planning, recommendation, and the like. The knowledge representation is a technology that automates and processes human experience information as knowledge data, and may include knowledge construction (data generation/classification), knowledge management (data utilization), and the like.

The above content is provided only for assisting in the understanding of the background art for the technical ideas of the present disclosure, and accordingly, may not be understood as a content corresponding to the prior art known to those skilled in the art to which the present disclosure pertains.

### [Disclosure]

### [Technical Problem]

Aspects of the present disclosure provide an artificial intelligence camera capable of efficiently expanding a range of image analysis based on artificial intelligence, and an operating method therefor.

### [Technical Solution]

The invention is defined by the appended set of claims. The description that follows is subjected to this limitation. Any disclosure lying outside the scope of said claims is only intended for illustrative as well as comparative purposes.

The configuring of the cluster may include communicating with the other artificial intelligence cameras to determine any one of the artificial intelligence cameras as a master node of the cluster, and the allocated non-artificial intelligence camera may be determined according to a command from the master node.

The receiving of the captured image may include: receiving an event alarm signal generated by the allocated non-artificial intelligence camera; and requesting the allocated non-artificial intelligence camera to provide the captured image in response to the event alarm signal.

The configuring of the cluster may include communicating with the other artificial intelligence cameras to determine any one of the artificial intelligence cameras as a master node of the cluster, and the event alarm signal is received through the master node.

The receiving of the captured image may further include changing a setting of the allocated non-artificial intelligence camera into a predetermined setting value in response to the event alarm signal before requesting the allocated non-artificial intelligence camera to provide the captured image.

The length of the image received from the allocated non-artificial intelligence camera may be variably adjusted depending on whether or not a probability according to deep learning is a threshold value or more when the received image is analyzed using the artificial intelligence processor.

The operating method may further include: communicating status messages with the other artificial intelligence cameras; additionally receiving images captured by other non-artificial intelligence cameras allocated to the other artificial intelligence cameras by accessing the other non-artificial intelligence cameras when the other artificial intelligence cameras are determined to be abnormal on the basis of the status messages; analyzing the additionally received images using the artificial intelligence processor; and transmitting result information according to the analysis of the additionally received images together with identifiers of the other non-artificial intelligence cameras to the external device through the network.

The artificial intelligence camera may further include an image sensor, and the operating method may further include: capturing an image through the image sensor; and analyzing the captured image using the artificial intelligence processor.

The transmitting of the result information according to the analysis of the received image together with the identifier of the allocated non-artificial intelligence camera to the external device through the network may include transmitting the captured image, first metadata, and second metadata to the external device, the first metadata includes result information according to the analysis of the captured image, and the second metadata includes the result information according to the analysis of the received image and the identifier of the allocated non-artificial intelligence camera.

The configuring of the cluster may include: receiving the registration information of the other artificial intelligence cameras from a user terminal; and configuring the cluster by performing communication with the other artificial intelligence cameras using the received registration information.

The sharing of the registration information of the non-artificial intelligence cameras with the other artificial intelligence cameras may include: receiving the registration information of the non-artificial intelligence cameras from a user terminal; and providing the received registration information to the other artificial intelligence cameras.

According to an aspect of an exemplary embodiment, there is provided a camera including: an optical system; a first processor configured to process an image generated according to light received through the optical system; a second processor configured to operate in response to control of the first processor and analyze the processed image on the basis of a deep learning method; and a network interface providing communication through a network, wherein the first processor may be configured to configure a cluster for the image analysis together with external artificial intelligence cameras by exchanging registration information with the external artificial intelligence cameras through the network, wherein the cluster refers to a plurality of artificial intelligence cameras which are configured to receive registration information of an additional artificial intelligence camera when the additional artificial intelligence camera is added to the cluster, share registration information of non-artificial intelligence cameras with the external artificial intelligence cameras so as to access the non-artificial intelligence cameras through the network, receive, when one of the non-artificial intelligence cameras is allocated, an image captured by the allocated non-artificial intelligence camera by accessing the allocated non-artificial intelligence camera, command the second processor to analyze the received image, and transmit result information according to the analysis of the received image together with an identifier of the allocated non-artificial intelligence camera to an external device through the network.

The first processor may be configured to access an additional artificial intelligence camera according to registration information of the additional artificial intelligence camera to add the additional artificial intelligence camera to the cluster, when the registration information of the additional artificial intelligence camera is received.

The first processor may be configured to communicate with the external artificial intelligence cameras to determine any one of cameras of the cluster as a master node of the cluster, and the allocated non-artificial intelligence camera is determined according to a command from the master node.

The first processor may be configured to change a setting of the allocated non-artificial intelligence camera into a predetermined setting value before requesting the allocated non-artificial intelligence camera to provide the captured image.

The first processor may be configured to variably adjust a length of the image received from the allocated non-artificial intelligence camera depending on whether or not a probability according to deep learning is a threshold value or more when the second processor analyzes the received image.

### [Advantageous Effects]

According to embodiments of the present disclosure, an artificial intelligence camera capable of efficiently expanding a range of image analysis based on artificial intelligence, and an operating method therefor are provided.

### [Description of Drawings]

FIG. 1 is a block diagram illustrating an image capturing system according to an embodiment of the present disclosure;
FIG. 2 is a block diagram illustrating an embodiment of any one of artificial intelligence cameras of FIG. 1;
FIG. 3 is a block diagram illustrating an embodiment of a main processor of FIG. 2;
FIG. 4 is a block diagram illustrating an embodiment of an artificial intelligence processor of FIG. 2;
FIG. 5 is a conceptual diagram illustrating an embodiment of a format of output data of the artificial intelligence camera;
FIG. 6 is a flowchart illustrating a method for analyzing an image captured by the artificial intelligence camera;
FIG. 7 is a flowchart illustrating an operating method for an artificial intelligence camera for configuring a cluster capable of interacting with non-artificial intelligence cameras according to an embodiment of the present disclosure;
FIG. 8 is a flowchart illustrating an embodiment of S210 of FIG. 7;
FIG. 9 is a flowchart illustrating an embodiment of S220 of FIG. 7;
FIG. 10 is a table illustrating cluster information stored in and shared by artificial intelligence cameras after configuring a cluster;
FIG. 11 is a table illustrating non-artificial intelligence camera information stored in and shared by the artificial intelligence cameras after configuring the cluster;
FIG. 12 is a flowchart illustrating an embodiment of a method for adding an artificial intelligence camera to the cluster capable of interacting with the non-artificial intelligence cameras;
FIG. 13 is a flowchart illustrating a method for analyzing an image of the non-artificial intelligence camera by the artificial intelligence camera included in the cluster according to an embodiment of the present disclosure;
FIG. 14 is a flowchart illustrating an embodiment of S420 of FIG. 13; and
FIG. 15 is a flowchart illustrating a method for analyzing an image of the non-artificial intelligence camera by the artificial intelligence camera included in the cluster according to another embodiment of the present disclosure.

### [Mode for Invention]

Hereafter, exemplary embodiments in accordance with the present disclosure will be described in detail with reference to the accompanying drawings. The following descriptions will be focused on only portions required for understanding operations in accordance with the present disclosure, and the descriptions of the other portions will be omitted in order not to unnecessarily obscure the subject matters of the present disclosure. However, the present disclosure is not limited to the embodiments described herein, but may be embodied in different manners. The embodiments described in this specification are only provided to describe the present disclosure in detail, such that the technical idea of the present disclosure can be easily carried out by those skilled in the art to which the present disclosure pertains.

Throughout the specification, when one element is referred to as being "connected" or "coupled" to another element, it may not only indicate that the former element is "directly connected" or "directly coupled" to the latter element, but also indicate that the former element is "indirectly connected" or "indirectly coupled" to the latter element with another element interposed therebetween. The terms used herein are provided to describe specific embodiments, and do not limit the present disclosure. In this specification, when an element "includes" or "comprises" a component, it may indicate that the element does not exclude another component unless referred to the contrary, but can further include or comprise another component. "At least any one of X, Y and Z" and "at least any one selected from a group consisting of X, Y and Z" may be construed as each of X, Y and Z or a combination of two or more of X, Y and Z (for example, XYZ, XYY, YZ and ZZ). Here, "and/or" includes one or more combinations of corresponding components.

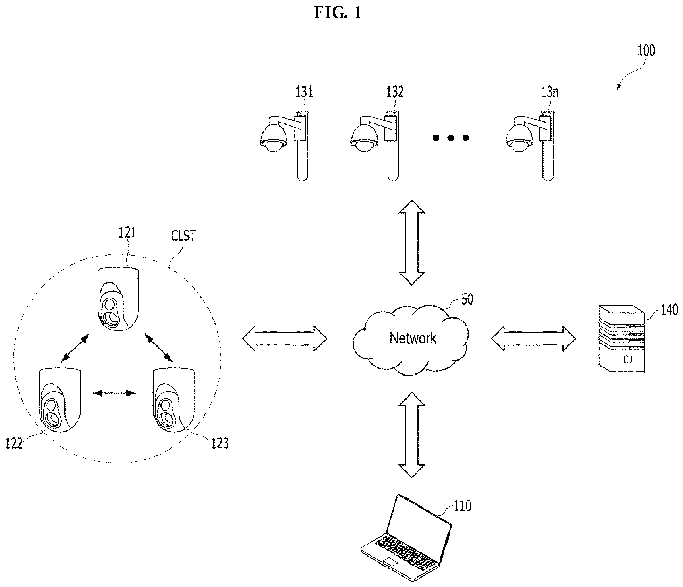

FIG. 1 is a block diagram illustrating an image capturing system according to an embodiment of the present disclosure.

The image capturing system may include a plurality of devices, servers, and/or software components that operate to perform methods according to embodiments described herein. Devices and servers illustrated in FIG. 1 may be deployed in other manners, and operations and services provided by such devices and/or servers may be combined with or separated from each other in order to perform embodiments described herein and may also be performed by more or fewer devices and servers. One or more devices and/or servers may be driven by the same or different entities, for example, companies.

Referring to FIG. 1, an image capturing system 100 may include a network 50, a user terminal 110, a plurality of artificial intelligence cameras 121 to 123, and first to n-th non-artificial intelligence cameras 131 to 13n, and an image management server 140.

The network 50 may include at least one of a public network, at least one private network, a wired network, a wireless network, another appropriate type of network, and combinations thereof. Each of the components in the image capturing system 100 may include at least one of a wired communication function and a wireless communication function, and accordingly, these components may communicate with each other through the network 50.

The user terminal 110 may communicate with the plurality of artificial intelligence cameras 121 to 123, the first to n-th non-artificial intelligence cameras 131 to 13n, and the image management server 140 through the network 50. The user terminal 110 may receive images that are being captured from each of the plurality of artificial intelligence cameras 121 to 123 and the first to n-th non-artificial intelligence cameras 131 to 13n in real time, and display the received images. In addition, the user terminal 110 may access the image management server 140 to receive images stored in the image management server 140, and display the received images. In this case, the images stored in the image management server 140 may be images captured by the plurality of artificial intelligence cameras 121 to 123 and the first to n-th non-artificial intelligence cameras 131 to 13n.

The image management server 140 further stores metadata that may include various types of information such as motion detection, face detection, intrusion detection, gunshot detection, object/pattern information, and similarity information of objects in association with the images. However, embodiments of the present disclosure are not limited thereto. For example, the images and the metadata associated with the images may be stored in different databases.

The metadata may be provided by the artificial intelligence camera. The user terminal 110 may receive the metadata from the image management server 140, display information indicated by the received metadata, receive a corresponding image from the image management server 140 in response to a user input for selecting the metadata, and display the received image.

In embodiments, the user terminal 110 may include a computer device, which may include applications for accessing components such as the plurality of artificial intelligence cameras 121 to 123, the first to n-th non-artificial intelligence cameras 131 to 13n, and the image management server 140 connected to the network 50, receiving images from these components, and displaying the received images.

The plurality of artificial intelligence cameras 121 to 123 may be provided to the image capturing system 100. FIG. 1 illustrates that three artificial intelligence cameras 121 to 123 are provided. Each of first to third artificial intelligence cameras 121 to 123 includes at least one artificial intelligence processor configured to perform image analysis on the basis of artificial intelligence. Each of the first to third artificial intelligence cameras 121 to 123 may capture an image, analyze the captured image through the artificial intelligence processor, and provide the captured image and an image analysis result to the image management server 140. In addition, each of the first to third artificial intelligence cameras may record au audio, analyze the recorded audio through the artificial intelligence processor, and provide the recorded audio and an audio analysis result to the image management server 140. Hereinafter, for convenience of description, embodiments of the present disclosure will be described with a focus on operations for image analysis.

Each of the first to third artificial intelligence cameras 121 to 123 may receive an image from at least one of the first to n-th non-artificial intelligence cameras 131 to 13n, analyze the received image through the artificial intelligence processor, and provide an image analysis result to the image management server 140. For example, the non-artificial intelligence camera may include a processor configured to perform conventional event detection algorithms such as motion detection, face detection, and sound detection rather than artificial intelligence, but may not include an artificial intelligence processor.

The first to third artificial intelligence cameras 121 to 123 configure a cluster CLST for image analysis by exchanging registration information with each other, and each non-artificial intelligence camera may be allocated to any one of the artificial intelligence cameras 121 to 123 in the cluster CLST. In this case, the registration information may include information for accessing the artificial intelligence camera, such as a uniform resource locator (URL) address, an Internet protocol (IP) address, a port number, and a camera login account of the artificial intelligence camera. The registration information of each artificial intelligence camera may be received from the user terminal 110 to any one of the first to third artificial intelligence cameras 121 to 123, and be shared by the first to third artificial intelligence cameras 121 to 123. In embodiments, the first to third artificial intelligence cameras 121 to 123 may periodically synchronize their registration information with each other.

Which non-artificial intelligence camera is allocated to each of the first to third artificial intelligence cameras 121 to 123 may be determined according to various methods. For example, the first to third artificial intelligence cameras 121 to 123 may notify each other of their available resources, and the allocation of each non-artificial intelligence camera may be performed with reference to the available resources. For example, the first to third artificial intelligence cameras 121 to 123 may communicate with each other to determine an artificial intelligence camera to function as a master node, and the master node may perform a task scheduling function. The master node may allocate each non-artificial intelligence camera to any one of the first to third artificial intelligence cameras 121 to 123 with reference to the available resources of each of the first to third artificial intelligence cameras 121 to 123.

As such, by configuring the cluster CLST including the first to third artificial intelligence cameras 121 to 123 to analyze the images of the first to n-th non-artificial intelligence cameras 131 to 13n, each non-artificial intelligence camera may be allocated to any one of the first to third artificial intelligence cameras 121 to 123 with reference to, for example, the available resources. Accordingly, the analysis of the images of the first to n-th non-artificial intelligence cameras 131 to 13n may be efficiently performed using the first to third artificial intelligence cameras 121 to 123 without providing a server including a separate artificial intelligence function. Therefore, the image analysis based on the artificial intelligence may be expanded to the images captured by the first to n-th non-artificial intelligence cameras 131 to 13n as well as the images captured by the first to n-th artificial intelligence cameras 121 to 123, without providing the server including the separate artificial intelligence function. Accordingly, an artificial intelligence camera capable of efficiently expanding a range of the image analysis based on the artificial intelligence, and an image capturing system including the same may be provided.

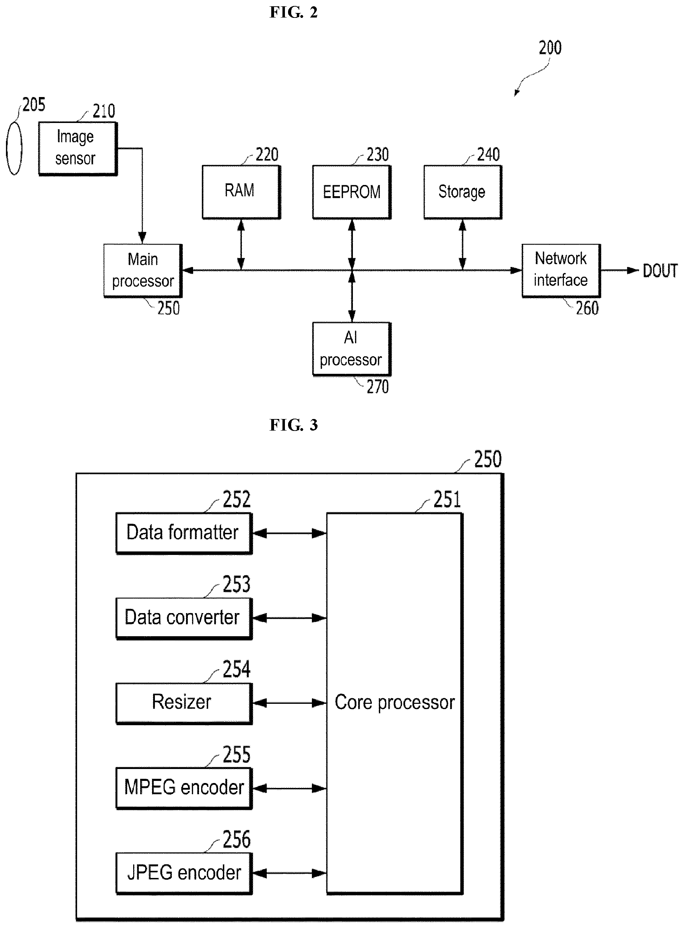

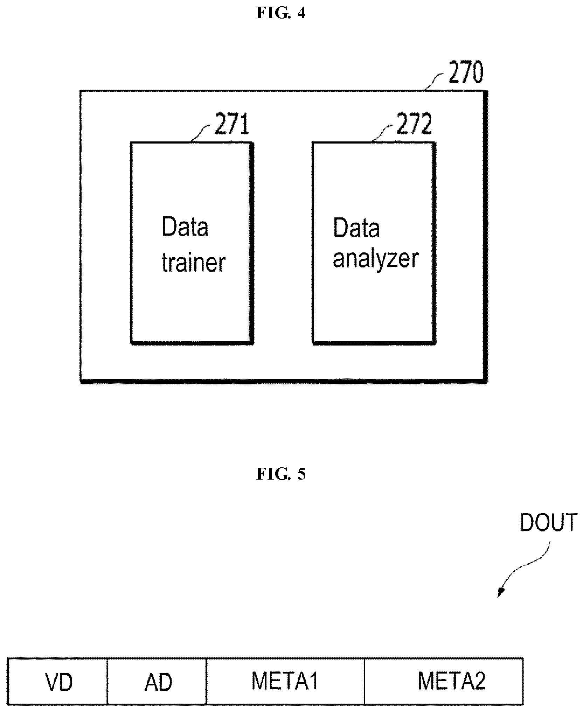

FIG. 2 is a block diagram illustrating an embodiment of any one of artificial intelligence cameras of FIG. 1. FIG. 3 is a block diagram illustrating an embodiment of a main processor of FIG. 2. FIG. 4 is a block diagram illustrating an embodiment of an artificial intelligence processor of FIG. 2.

Referring to FIG. 2, an artificial intelligence camera 200 may include an optical system 205, an image sensor 210, a random access memory (RAM) 220, an electrically erasable and programmable read only memory (EEPROM) 230, a storage 240, a main processor 250, a network interface 260, and an artificial intelligence (AI) processor 270.

The optical system 205 optically processes light from a subject.

The image sensor 210 may operate in response to the control of the main processor 250. The image sensor 210 is configured to convert an optical signal received through the lens 205 into an electrical signal and digitize the converted electrical signal to generate an image. For example, the image sensor 210 may include an analog-to-digital converter configured to convert an analog image signal into digital image data.

The RAM 220 is connected to the main processor 250. The RAM 220 may temporarily store an image processed by the main processor 250. The RAM 220 may be used as a buffer memory. The RAM 220 may be used as a working memory of the main processor 250. The electrically erasable and programmable read only memory (EEPROM) 230 may store program codes and/or instructions necessary for an operation of the main processor 250. The storage 240 may store setting data necessary for operations of the main processor 250. In addition, the storage 240 may further store program codes and/or instructions to be executed by the main processor 250. These program codes and/or instructions may be loaded from the storage 240 into the RAM 220 and executed by the main processor 250. At least some of the operations of the main processor 250 to be described below may be performed by the main processor 250 by executing these program codes and/or instructions. In embodiments, the storage 240 may include a nonvolatile storage medium such as a flash memory.

The main processor 250 controls general operations of the artificial intelligence camera 200. The main processor 250 may communicate with the components connected to the network 50 (see FIG. 1) through the network interface 260. The main processor 250 is configured to appropriately process the image received from the image sensor 210, and may transmit the processed image to the user terminal 110 through the network interface 260 as a live-view. In addition, the main processor 250 may upload the processed image to the image management server 140 through the network interface 260. Furthermore, the main processor 250 may receive audio data received through a microphone (not illustrated), appropriately process the received audio data, and transmit the processed audio data to an external apparatus through the network interface 260. In this case, the audio data and the image data may constitute multimedia data.

Referring to FIG. 3, the main processor 250 includes a core processor 251, a data formatter 252, a data converter 253, a resizer 254, a moving picture experts group (MPEG) encoder 255, and a joint photographic experts group (JPEG) encoder 256.

The core processor 251 controls general operations of the artificial intelligence camera 200 (see FIG. 2). In addition, the core processor 251 controls the data formatter 252, the data converter 253, the resizer 254, the MPEG encoder 255, and the JPEG encoder 256. The data formatter 252 may store the image from the image sensor 210 (see FIG. 2) in the RAM 220, the data converter 253 may convert image data of a red (R), green (G), and blue (B) format into luminance (Y) and image data of a chrominance (Cb and Cr) format, and the resizer 254 may convert resolution of the image data. The MPEG encoder 255 is a moving image encoder and may compress moving image data, and the JPEG encoder 256 is a still image encoder and may compress still image data. As such, the main processor 250 is configured to process the image received from the image sensor 210.

In embodiments, components for image processing such as the data formatter 252, the data converter 253, the resizer 254, the MPEG encoder 255, and the JPEG encoder 256 may be implemented through hardware, software, firmware, and combinations thereof, respectively, and may be combined with each other or separated into more components. When at least one of the data formatter 252 , the data converter 253 , the resizer 254 , the MPEG encoder 255 , and the JPEG encoder 256 is implemented as software, the software may be stored in a computer-readable storage medium, such as the storage 240 of FIG. 2, and may be executed by the core processor 251. In addition, at least some of the components for image processing, such as the data formatter 252, the data converter 253, the resizer 254, the MPEG encoder 255, and the JPEG encoder 256 may be implemented through one dedicated processor such as an image processing unit.

Referring to FIG. 2 again, the main processor 250 may command the artificial intelligence processor 270 to analyze the processed image. The artificial intelligence processor 270 is configured to analyze the processed image on the basis of an artificial intelligence method. An image analysis result may be temporarily stored in, for example, the RAM 220, and the main processor 250 may transmit the image analysis result together with the image to the user terminal 110 or the image management server 140 through the network interface 260.

Referring to FIG. 4, the artificial intelligence processor 270 may include a data trainer 271 and a data analyzer 272. The data trainer 271 may include a deep learning framework, and may accordingly perform a neural network algorithm such as a convolutional neural network (CNN) and a vision algorithm such as a scale invariant feature transform (SIFT). The data trainer 271 may train various image analysis criteria such as object/pattern recognition and similarity inspection between objects. The data trainer 271 may train and infer criteria regarding data to be used for image analysis. The data trainer 271 may train a criterion for image analysis by obtaining data to be used for training and applying the obtained data to a data analysis model.

The data analyzer 272 may perform analysis on an input image in response to a request from the main processor 250 (see FIG. 2). The data analyzer 272 may perform the image analysis using a trained data recognition model. The data analyzer 272 may obtain data according to criteria set by training, perform the image analysis by using the data analysis model using the obtained data as an input value, and output result information according to the image analysis. In addition, the result information of the image analysis may be used to update the data analysis model.

The data trainer 271 and the data analyzer 272 may be implemented through hardware, software, firmware, and combinations thereof, respectively, and may be combined with each other or separated into more components. At least one of the data trainer 271 and the data analyzer 272 may be implemented in the form of a dedicated hardware chip for artificial intelligence, or may be implemented through a general-purpose processor or a graphics dedicated processor. When at least one of the data trainer 271 and the data analyzer 272 is implemented as software, the software may be stored in a computer-readable storage medium such as the storage 240 of FIG. 2, and executed by a processor such as the general-purpose processor or the graphics dedicated processor.

The data trainer 271 and the data analyzer 272 may be mounted on one electronic device or be mounted on separate electronic devices, respectively. For example, the data trainer 271 may be included in an external device, and the data analyzer 272 may be included in the artificial intelligence camera 200 (see FIG. 2). In this case, the data trainer 271 and the data analyzer 272 may communicate with each other in a wired or wireless manner, the data trainer 271 may provide constructed model information to the data analyzer 272, and data input to the data analyzer 272 may be provided to the data trainer 271 as additional training data.

Referring to FIG. 2 again, the main processor 250 may configure the cluster CLST (see FIG. 1) for image analysis by exchanging registration information with other artificial intelligence cameras, and share registration information of the first to n-th non-artificial intelligence cameras 131 to 13n with the other artificial intelligence cameras so as to be able to access the first to n-th non-artificial intelligence cameras 131 to 13n. Communication with the other artificial intelligence cameras and the first to n-th non-artificial intelligence cameras 131 to 13n is performed through the network interface 260. When any one of the first to n-th non-artificial intelligence cameras 131 to 13n is allocated, the main processor 250 may control the artificial intelligence processor 270 to analyze an image captured by the allocated non-artificial intelligence camera.

FIG. 5 is a conceptual diagram illustrating an embodiment of a format of output data of the artificial intelligence camera.

Referring to FIGS. 2 and 5, the main processor 250 may transmit output data DOUT including a video VD, an audio AD, first metadata META1, and second metadata META2 to the user terminal 110 or the image management server 140 through the network interface 260. The image VD and the audio AD are generated by the main processor 250 as described with reference to FIG. 2. The first metadata META1 may include analysis result information of the artificial intelligence processor 270 for the image VD and/or the audio AD. The second metadata META2 may include analysis result information of the artificial intelligence processor 270 on the image and/or the audio received from the non-artificial intelligence camera.

The second metadata META2 may further include an identifier of the corresponding non-artificial intelligence camera. The identifier may include various types of data that may identify the non-artificial intelligence camera, such as an ID and an IP address of the non-artificial intelligence camera. Therefore, the user terminal 110 or the image management server 140 receiving the output data DOUT may determine which non-artificial intelligence camera the second metadata META2 included in the output data DOUT corresponds to.

More detailed contents related to operations of the main processor 250 will be described below.

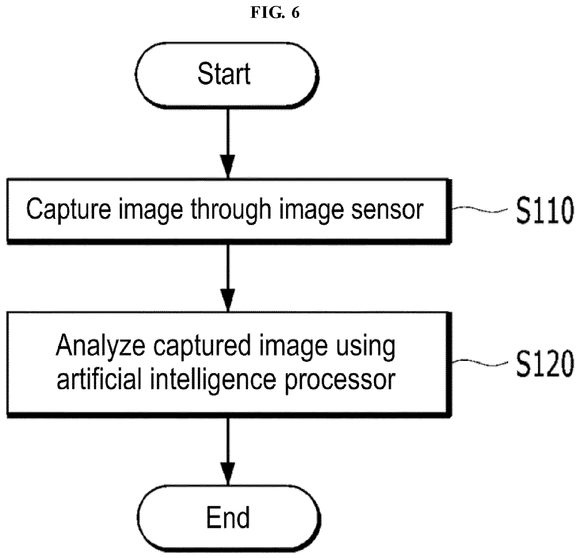

FIG. 6 is a flowchart illustrating a method for analyzing an image captured by the artificial intelligence camera.

Referring to FIGS. 2 and 6, in S110, an image is captured through the image sensor 210. In S120, the captured image is analyzed using the artificial intelligence processor 270. The main processor 250 may process the image captured through the image sensor 210 and command the artificial intelligence processor 270 to analyze the processed image. The main processor 250 may include the captured image, the audio, and result information according to the analysis of the image in an image VD field, an audio AD field, and a first metadata META1 field of the output data DOUT illustrated in FIG. 5, respectively.

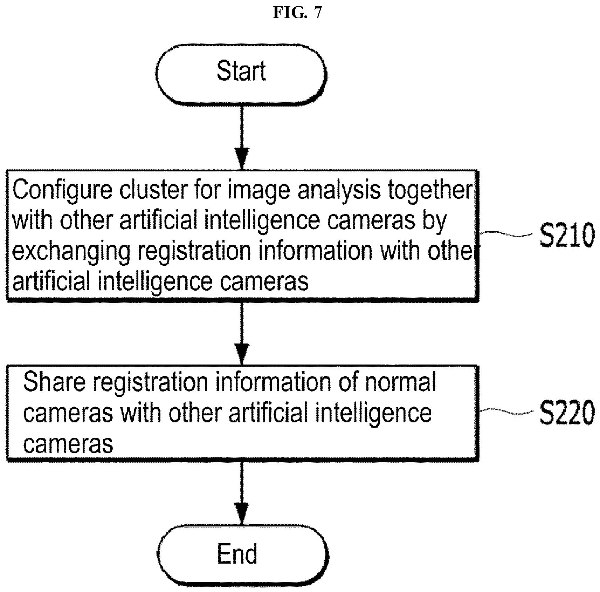

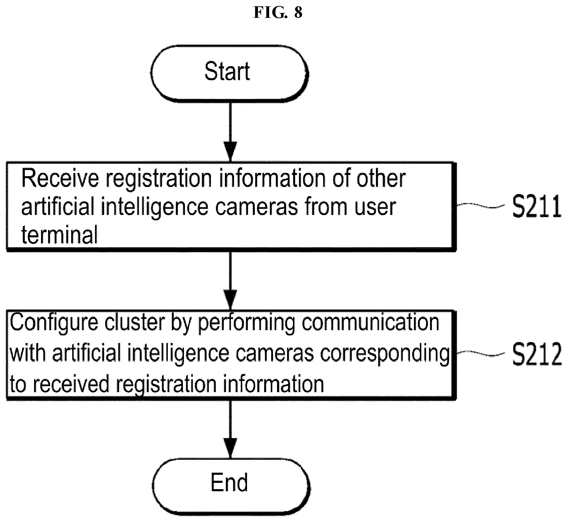

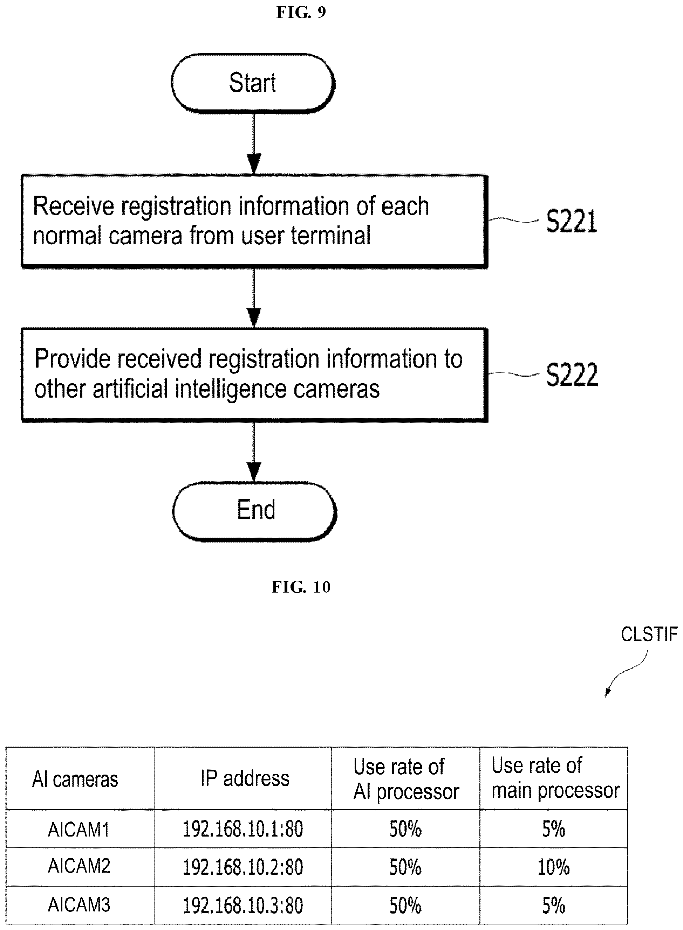

FIG. 7 is a flowchart illustrating an operating method for an artificial intelligence camera for configuring a cluster capable of interacting with non-artificial intelligence cameras according to an embodiment of the present disclosure. FIG. 8 is a flowchart illustrating an embodiment of S210 of FIG. 7. FIG. 9 is a flowchart illustrating an embodiment of S220 of FIG. 7.

Referring to FIG. 7 together with FIGS. 1 and 2, in S210, the artificial intelligence camera 200 configures the cluster for image analysis together with other artificial intelligence cameras by exchanging the registration information with the other artificial intelligence cameras. The first to third artificial intelligence cameras 121 to 123 may communicate with each other through the network 50 as described with reference to FIG. 1, and each artificial intelligence camera transmits the registration information to other artificial intelligence cameras and receives the registration information from the other artificial intelligence cameras, such that cluster CLST including the artificial intelligence cameras 121 to 123 is generated.

The registration information of each artificial intelligence camera may be provided from a user through the user terminal 110. Referring to FIG. 8, the artificial intelligence camera 200 may receive the registration information of other artificial intelligence cameras from the user terminal 110 (S211), and configure the cluster CLST together with the artificial intelligence cameras corresponding to the received registration information by performing communication with the artificial intelligence cameras corresponding to the received registration information (S212). For example, when the user terminal 110 accesses the first artificial intelligence camera 121 to provide the registration information of the second and third artificial intelligence cameras 122 and 123 to the first artificial intelligence camera 121, the first artificial intelligence camera 121 accesses each of the second and third artificial intelligence cameras 122 and 123 using the provided registration information, such that the first to third artificial intelligence cameras 121 to 123 may share the registration information with each other. Therefore, the cluster CLST including the first to third artificial intelligence cameras 121 to 123 may be generated.

When the cluster CLST is generated, the first to third artificial intelligence cameras 121 to 123 of the cluster CLST may communicate with each other to perform a negotiation for determining any one of the first to third artificial intelligence cameras 121 to 123 as a master node. Therefore, any one of the first to third artificial intelligence cameras 121 to 123 may function as the master node, and the other artificial intelligence cameras may function as agent nodes. The master node may allocate each of the first to n-th non-artificial intelligence cameras 131 to 13n to any one of the first to third artificial intelligence cameras 121 to 123 so as to perform image analysis using a deep learning method on images of the first to n-th non-artificial intelligence cameras 131 to 13n.

Referring to FIGS. 1, 2 and 7 again, in S220, the artificial intelligence camera 200 shares the registration information of the first to n-th non-artificial intelligence cameras 131 to 13n with other artificial intelligence cameras. Therefore, each of the first to third artificial intelligence cameras 121 to 123 may access the first to n-th non-artificial intelligence cameras 131 to 13n through the network 50. For example, the artificial intelligence camera 200 may provide the registration information of the non-artificial intelligence cameras to other artificial intelligence cameras, and receive the registration information of the non-artificial intelligence cameras from the other artificial intelligence cameras. In this case, the registration information may include information for accessing the non-artificial intelligence camera, such as a uniform resource locator (URL) address, an Internet protocol (IP) address, a port number, and a camera login account of the non-artificial intelligence camera.

The registration information of the non-artificial intelligence camera may be provided from the user through the user terminal 110. The registration information of the first to n-th non-artificial intelligence cameras 131 to 13n may be shared by the first to third artificial intelligence cameras 121 to 123 according to various methods. Referring to FIG. 9, the artificial intelligence camera 200 may receive the registration information of the first to n-th non-artificial intelligence cameras 131 to 13n from the user terminal 110 (S221), and provide the received registration information to other artificial intelligence cameras (S222). For example, when the user terminal 110 provides the registration information of the first to n-th non-artificial intelligence cameras 131 to 13n to the first artificial intelligence camera 121, the first artificial intelligence camera 121 may provide the provided registration information to the second and third artificial intelligence cameras 122 and 123.

FIG. 10 is a table illustrating cluster information stored in and shared by artificial intelligence cameras after configuring a cluster.

After the cluster CLST is generated, the first to third artificial intelligence cameras 121 to 123 in the cluster CLST may store and share cluster information CLSTIF with each other. Referring to FIGS. 1 and 10, the cluster information CLSTIF may include IP addresses, use rates of the artificial intelligence processors according to processing of tasks based on artificial intelligence, and use rates of the main processors that correspond to each of identifiers AICAM1, AICAM2, and AICAM3 of the first to third artificial intelligence cameras 121 to 123.

The cluster information CLSTIF may be collected by the master node of the first to third artificial intelligence cameras 121 to 123, and be shared by all of the first to third artificial intelligence cameras 121 to 123. The master node may allocate each of the first to n-th non-artificial intelligence cameras 131 to 13n to any one of the first to third artificial intelligence cameras 121 to 123 with reference to the use rates of the artificial intelligence processors and the use rates of the main processors of the cluster information CLSTIF.

The user may access any one of the first to third artificial intelligence cameras 121 to 123 of the cluster CLST through the user terminal 110 to inquire at least some of the cluster information CLSTIF.

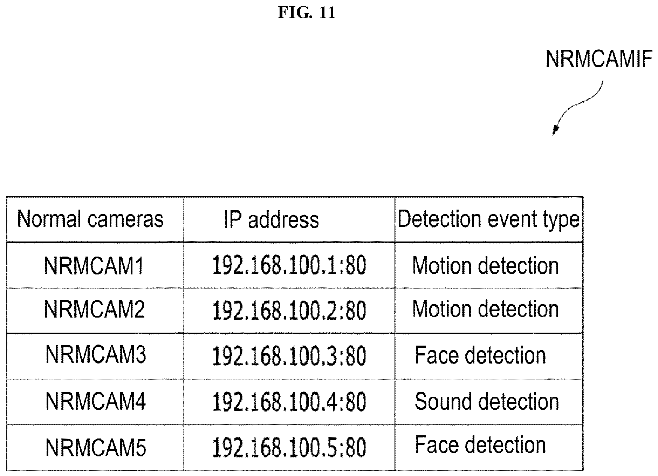

FIG. 11 is a table illustrating non-artificial intelligence camera information stored in and shared by the artificial intelligence cameras after configuring the cluster. FIG. 11 illustrates that five non-artificial intelligence cameras are provided in the image capturing system, for convenience of description.

The first to third artificial intelligence cameras 121 to 123 in the cluster CLST may store and share non-artificial intelligence camera information NRMCAMIF with each other. Referring to FIGS. 1 and 11, the non-artificial intelligence camera information NRMCAMIF may include IP addresses and detection event types that correspond to each of identifiers NRMCAM1 to NRMCAM5 of first to fifth non-artificial intelligence cameras 131 to 135. In embodiments, the non-artificial intelligence camera may include a processor configured to perform image analysis based on at least one of conventional event detection algorithms rather than artificial intelligence, and the non-artificial intelligence camera information NRMCAMIF may further include information on an event type of an event detection algorithm employed in the non-artificial intelligence camera. For example, the detection event type may include motion detection, face detection, sound detection, and the like.

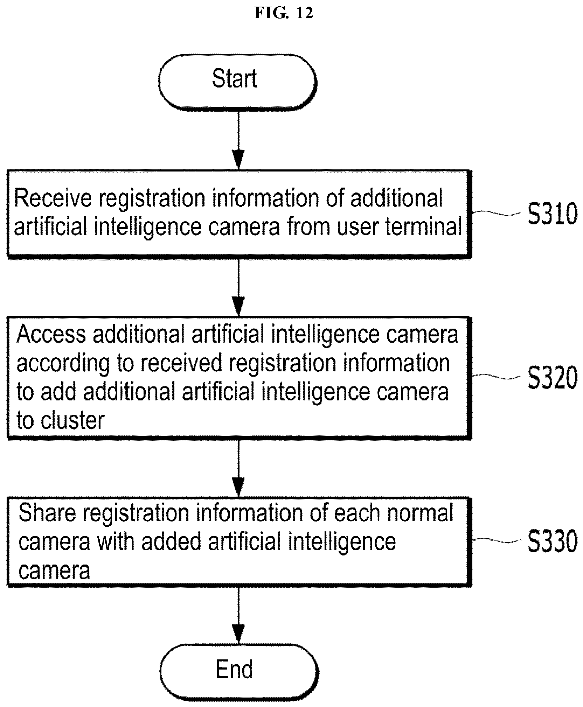

FIG. 12 is a flowchart illustrating an embodiment of a method for adding an artificial intelligence camera to the cluster capable of interacting with the non-artificial intelligence cameras.

Referring to FIG. 12 together with FIGS. 1 and 2, in S310, the artificial intelligence camera 200 may receive registration information of an additional artificial intelligence camera from the user terminal 110. In S320, the artificial intelligence camera 200 accesses the additional artificial intelligence camera according to the received registration information to add the additional artificial intelligence camera to the cluster CLST. In addition, the received registration information is shared by the artificial intelligence cameras in the cluster CLST including the artificial intelligence camera 200. For example, when the registration information of the additional artificial intelligence camera input by the user is provided to the first artificial intelligence camera 121 through the user terminal 110, the first artificial intelligence camera 121 may transmit the provided registration information to the second and third artificial intelligence cameras 122 and 123. Each of the first to third artificial intelligence cameras 121 to 123 may access the additional artificial intelligence camera according to the provided registration information, and the first to third artificial intelligence cameras 121 to 123 and the additional artificial intelligence camera share the registration information with each other. Therefore, the additional artificial intelligence camera is added to the cluster CLST.

In S330, the artificial intelligence camera 200 may share the registration information of each non-artificial intelligence camera with the added artificial intelligence camera. For example, the first to third artificial intelligence cameras 121 to 123 may share the non-artificial intelligence camera information NRMCAMIF (see FIG. 11) with the additional artificial intelligence camera.

As such, resources of the cluster CLST may be relatively easily expanded. Accordingly, it is possible to increase the number of non-artificial intelligence cameras for which image analysis based on artificial intelligence may be supported while expanding a monitoring range by image capturing by adding the artificial intelligence camera that may capture an image by itself without providing or further installing the server including the separate artificial intelligence function.

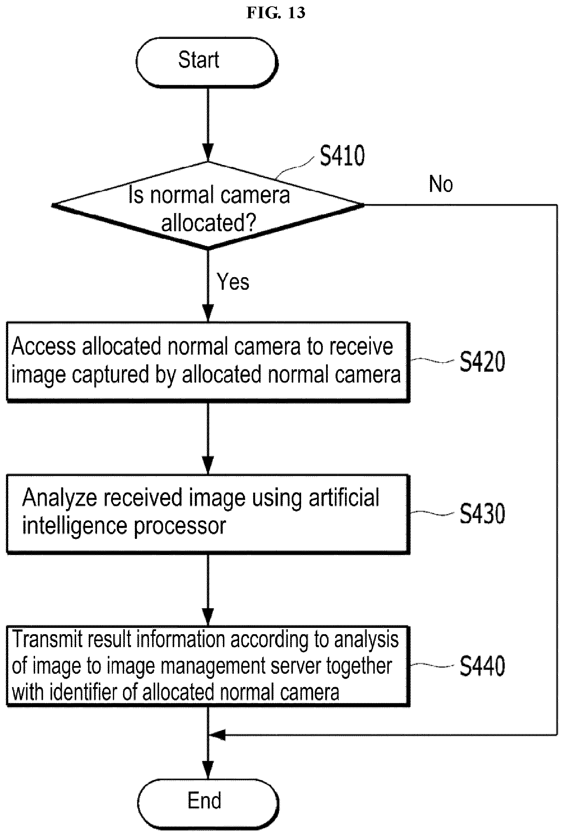

FIG. 13 is a flowchart illustrating a method for analyzing an image of the non-artificial intelligence camera by the artificial intelligence camera included in the cluster according to an embodiment of the present disclosure.

Referring to FIG. 13 together with FIGS. 1 and 2, in S410, any one of the first to n-th non-artificial intelligence cameras 131 to 13n may be allocated to the artificial intelligence camera 200. As described above, the allocation may be performed by the master node of the first to third artificial intelligence cameras 121 to 123 in the cluster CLST. In this case, the artificial intelligence camera 200 may be the master node or be the agent node. When the non-artificial intelligence camera is allocated, S420 is performed.

In S420, the artificial intelligence camera 200 accesses the allocated non-artificial intelligence camera to receive an image captured by the allocated non-artificial intelligence camera.

In S430, the artificial intelligence camera 200 analyzes the received image using the artificial intelligence processor 270.

In S440, the artificial intelligence camera 200 transmits result information according to the analysis of the image to the image management server 140 together with an identifier of the allocated non-artificial intelligence camera. The artificial intelligence camera 200 may include the result information according to the analysis of the image and the identifier of the non-artificial intelligence camera in a second metadata META2 field of the output data DOUT illustrated in FIG. 5.

As such, by analyzing the images of the first to n-th non-artificial intelligence cameras 131 to 13n through the cluster CLST including the first to third artificial intelligence cameras 121 to 123, each non-artificial intelligence camera may be allocated to any one of the first to third artificial intelligence cameras 121 to 123 with reference to, for example, the available resources. Accordingly, the analysis of the images of the first to n-th non-artificial intelligence cameras 131 to 13n may be efficiently performed using the artificial intelligence cameras 121 to 123 provided in advance without providing the server including the separate artificial intelligence function. Therefore, the image analysis based on the artificial intelligence may be expanded to the images captured by the first to n-th non-artificial intelligence cameras 131 to 13n as well as the images captured by the first to n-th artificial intelligence cameras 121 to 123, without providing the server including the separate artificial intelligence function. Accordingly, an image analysis method capable of efficiently expanding a range of the image analysis based on the artificial intelligence may be provided.

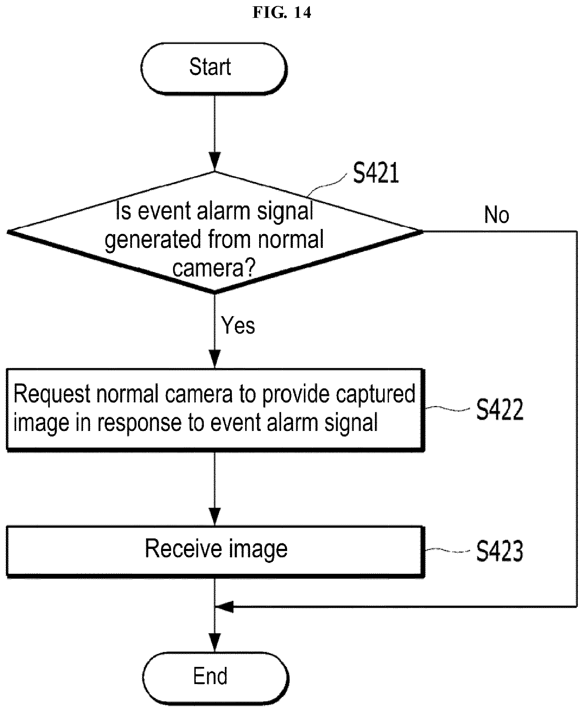

FIG. 14 is a flowchart illustrating an embodiment of S420 of FIG. 13.

Referring to FIG. 14 together with FIGS. 1 and 2, in S421, the artificial intelligence camera 200 may receive an event alarm signal from any one of the allocated non-artificial intelligence cameras 131 to 131. When the event alarm signal is received, S422 may be performed.

The non-artificial intelligence camera may be configured to perform conventional event detection algorithms such as motion detection, face detection, and sound detection rather than artificial intelligence, and may generate an event alarm signal in response to detection of an event. In embodiments, the artificial intelligence camera 200 may request the non-artificial intelligence camera to provide the event alarm signal in response to the detection of the event, or in response to the allocation of the non-artificial intelligence camera, and the non-artificial intelligence camera may provide the event alarm signal to the artificial intelligence camera 200. In embodiments, the master node may request the non-artificial intelligence camera to provide the event alarm signal in response to the detection of the event, and the non-artificial intelligence camera may provide the event alarm signal to the master node. In this manner, when the artificial intelligence camera 200 is the master node, the artificial intelligence camera 200 may receive the event alarm signal from the non-artificial intelligence camera. When the artificial intelligence camera 200 is the agent node, the artificial intelligence camera 200 may receive the event alarm signal through the master node.

When the non-artificial intelligence camera detects the event, the non-artificial intelligence camera may enter a special mode that supports image analysis through artificial intelligence (or deep learning). For example, the non-artificial intelligence camera may change internal setting values into preset values. The detection of the event means that image analysis through artificial intelligence is required, and the non-artificial intelligence camera may thus change setting values into values preset to be suitable for the image analysis through the artificial intelligence. An image transmitted to the image management server 140 to be suitable for being provided to a user through a display and an image suitable for the image analysis through the artificial intelligence may be different from each other. When the non-artificial intelligence camera is set to capture the image suitable for the image analysis through the artificial intelligence, a user who views the image received through the image management server 140 may feel uncomfortable. For this reason, the non-artificial intelligence camera may be set to capture the image suitable for being provided to the user at ordinary times. On the other hand, when the artificial intelligence camera 200 receives the image suitable for being provided to the user and performs image analysis on the image, it is required to perform pre-processing on the image so that the image is suitable for the image analysis. Many noises may be generated in the image in a preprocessing process, and it may take a lot of time to perform the preprocessing process. For this reason, the setting values of the non-artificial intelligence camera may be changed into values suitable for the image analysis through the artificial intelligence, and the artificial intelligence camera 200 may receive an image captured under the corresponding setting from the non-artificial intelligence camera. Therefore, the artificial intelligence camera 200 may perform the image analysis quickly and accurately without performing the pre-processing on the image or through a reduced pre-processing process. That is, setting values such as sharpness or exposure may be adjusted to be suitable for the artificial intelligence camera 200 to make an image quality of the non-artificial intelligence camera suitable for the artificial intelligence (or the deep learning). The non-artificial intelligence camera may change the setting values in response to a setting value control request from the artificial intelligence camera 200 or change the setting values in response to the detection of the event. Alternatively, the non-artificial intelligence camera may change the setting values in response to the control of the image management server 140. The entry of the non-artificial intelligence camera into the special mode may be performed before S422.

The non-artificial intelligence camera may change the internal setting values into values of the special mode only while capturing frames necessary for the image analysis through the artificial intelligence, and then restore the setting values to the previous setting values. Alternatively, the artificial intelligence camera 200 may control the non-artificial intelligence camera to restore the setting values when the image analysis of the artificial intelligence camera 200 ends.

In S422, the artificial intelligence camera 200 requests the non-artificial intelligence camera to provide the captured image in response to the event alarm signal.

In S423, the artificial intelligence camera 200 may receive the image from the non-artificial intelligence camera and analyze the received image using the artificial intelligence processor 270.

As another embodiment, the artificial intelligence camera 200 may access the allocated non-artificial intelligence camera at any time to receive an image and analyze the received image.

When the artificial intelligence camera 200 analyzes the image of the non-artificial intelligence camera, the artificial intelligence camera 200 may variably control a length of the image received from the non-artificial intelligence camera through S422 and S423 depending on whether or not a probability according to the deep learning (or the artificial intelligence) is a threshold value or more. The artificial intelligence processor 270 may output, for example, the probability according to the deep learning together with image analysis through the deep learning, and when this probability is the threshold value or more, it may mean that the image analysis is completed. When the probability according to the deep learning is the threshold value or more, additional image analysis is not required, and thus, the artificial intelligence camera 200 and/or the main processor 250 may variably adjust the length of the image received from the non-artificial intelligence camera depending on whether or not the probability according to the deep learning is the threshold value or more. The artificial intelligence camera 200 may receive an image having a relatively short length or an image having a relatively long length depending on whether or not the probability according to the deep learning is the threshold value or more. For example, the artificial intelligence camera 200 may request and receive an additional image when the additional image is required, and in this case, a length of the additional image, the number of times to the request for the additional image, and the like, may be variably adjusted depending on the probability according to the deep learning.

When the artificial intelligence camera 200 receives a still image from the non-artificial intelligence camera, the artificial intelligence camera 200 may request an additional still image depending on whether or not the probability according to the deep learning is the threshold value or more, and when the artificial intelligence camera 200 receives a dynamic image from the non-artificial intelligence camera, the artificial intelligence camera 200 may request the non-artificial intelligence camera to stop transmitting the dynamic image depending on whether or not the probability according to the deep learning is the threshold value or more.

As such, the artificial intelligence camera 200 may variably control the length of the image received from the non-artificial intelligence camera depending on whether or not the probability according to the deep learning is the threshold or more. Therefore, a time required for changing or restoring the setting values of the non-artificial intelligence camera may also be shortened.

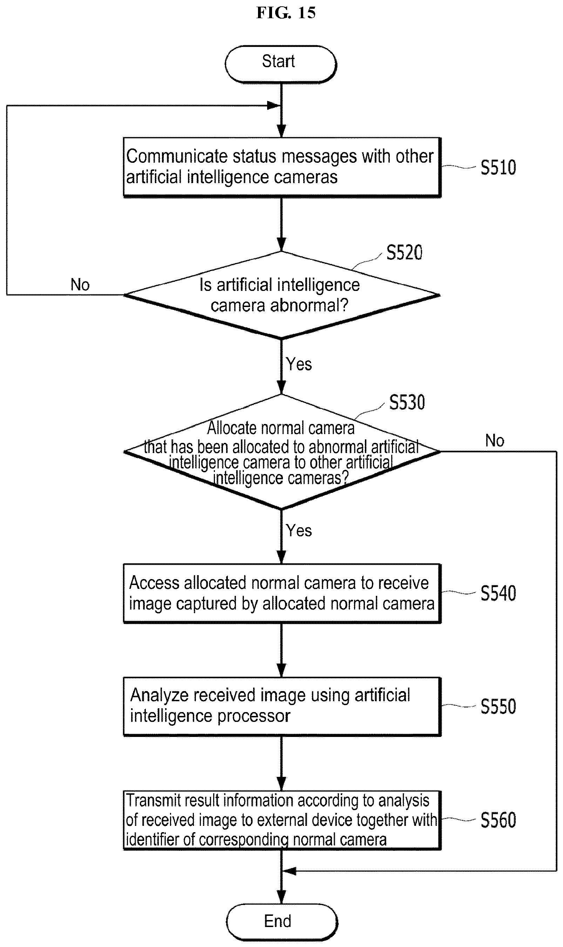

FIG. 15 is a flowchart illustrating a method for analyzing an image of the non-artificial intelligence camera by the artificial intelligence camera included in the cluster according to another embodiment of the present disclosure.

Referring to FIG. 15 together with FIGS. 1 and 2, in S510, the artificial intelligence camera 200 transmits and receives status messages to and from other artificial intelligence cameras to determine whether or not an abnormal artificial intelligence camera exists among the artificial intelligence cameras 121 to 123 in the cluster CLST. The artificial intelligence cameras 121 to 123 may periodically exchange the status messages with each other.

In S520, the artificial intelligence camera 200 performs S530 when the artificial intelligence camera in the cluster CLST is abnormal. Hereinafter, for convenience of description, it is assumed that the artificial intelligence camera 200 is the master node of the cluster CLST.

S530 may be performed by the master node. In S530, the artificial intelligence camera 200 may allocate the non-artificial intelligence camera that has been allocated to the abnormal artificial intelligence camera to the other artificial intelligence cameras. The master node may allocate the corresponding non-artificial intelligence camera to any one of the first to third artificial intelligence cameras 121 to 123 with reference to the use rates of the artificial intelligence processors and the use rates of the main processors of the cluster information CLSTIF (see FIG. 10). Hereinafter, for convenience of description, it is assumed that the corresponding non-artificial intelligence camera is allocated to the artificial intelligence camera 200.

In S540, the artificial intelligence camera 200 accesses the allocated non-artificial intelligence camera to receive an image. In S550, the artificial intelligence camera 200 analyzes the received image using the artificial intelligence processor 270. In S560, the artificial intelligence camera 200 transmits result information according to the analysis of the image to the image management server 140 together with an identifier of the corresponding non-artificial intelligence camera.

As such, an abnormal resource in the cluster CLST may be relatively easily excluded from the cluster CLST, and accordingly, the image analysis based on the artificial intelligence may be stably performed on the image of the non-artificial intelligence camera. For example, a time during which the image analysis based on the artificial intelligence is not provided for the non-artificial intelligence camera may be reduced or minimized.

## Claims

1. An operating method for any one of artificial intelligence cameras (121, 122, 123) that communicate with each other through a network (50), the artificial intelligence cameras (121, 122, 123) each including an artificial intelligence processor configured to perform object and pattern recognition and similarity inspection between objects using a deep learning method, the operating method comprising:
configuring a cluster for the object and pattern recognition and similarity inspection between objects together with other artificial intelligence cameras (121, 122, 123) using registration information of the other artificial intelligence cameras (121, 122, 123), wherein the cluster refers to a plurality of artificial intelligence cameras which are configured to receive registration information of an additional artificial intelligence camera (121, 122, 123) when the additional artificial intelligence camera (121, 122, 123) is added to the cluster, wherein registration information is information for accessing the artificial intelligence cameras (121, 122, 123);
sharing registration information of non-artificial intelligence cameras (131, 132, ... 13n) with the other artificial intelligence cameras (121, 122, 123) so as to access the non-artificial intelligence cameras (131, 132, ... 13n) through the network (50);
receiving, when one of the non-artificial intelligence cameras (131, 132, ... 13n) is allocated, an image captured by the allocated one of the non-artificial intelligence cameras (131, 132, ... 13n) by accessing the allocated one of the non-artificial intelligence cameras (131, 132, ... 13n);
analyzing the received image using the artificial intelligence processor of at least one of the artificial intelligence cameras (121, 122, 123); and
transmitting result information according to the analysis of the received image together with an identifier of the allocated one of the non-artificial intelligence cameras (131, 132, ... 13n) to an external device through the network (50).

2. The operating method of claim 1, wherein the configuring of the cluster includes communicating with the other artificial intelligence cameras (121, 122, 123) to determine any one of the artificial intelligence cameras (121, 122, 123) as a master node of the cluster, and the one of the non-artificial intelligence cameras (131, 132, ... 13n) is determined according to a command from the master node.

3. The operating method of claim 1, wherein the receiving of the captured image includes:
receiving an event alarm signal generated by the one of the non-artificial intelligence cameras (131, 132, ... 13n); and
requesting the one of the non-artificial intelligence cameras (131, 132, ... 13n) to provide the captured image in response to the event alarm signal.

4. The operating method of claim 3, wherein the configuring of the cluster includes communicating with the other artificial intelligence cameras (121, 122, 123) to determine any one of the artificial intelligence cameras (121, 122, 123) as a master node of the cluster, and the event alarm signal is received through the master node.

5. The operating method of claim 3, wherein the receiving of the captured image further includes changing a setting of the one of the non-artificial intelligence cameras (131, 132, ... 13n) into a predetermined setting value in response to the event alarm signal before requesting the one of the non-artificial intelligence cameras (131, 132, ... 13n) to provide the captured image.

6. The operating method of claim 1, wherein in the receiving of the image captured by the one of the non-artificial intelligence cameras (131, 132, ... 13n), a length of the image received from the one of the non-artificial intelligence cameras (131, 132, ... 13n) is variably adjusted depending on whether or not a probability according to deep learning is a threshold value or more when the received image is analyzed using the artificial intelligence processor.

7. The operating method of claim 1, further comprising:
communicating status messages with the other artificial intelligence cameras (121, 122, 123);
additionally receiving images captured by other non-artificial intelligence cameras (131, 132, ... 13n) to the other artificial intelligence cameras (121, 122, 123) by accessing the other non-artificial intelligence cameras (131, 132, ... 13n) when the other artificial intelligence cameras (121, 122, 123) are determined to be abnormal on the basis of the status messages;
analyzing the additionally received images using the artificial intelligence processor; and
transmitting result information according to the analysis of the additionally received images together with identifiers of the other non-artificial intelligence cameras (131, 132, ... 13n) to the external device through the network (50).

8. The operating method of claim 1, wherein the artificial intelligence camera (121, 122, 123) further includes an image sensor, and
the operating method further comprises:
capturing an image through the image sensor; and
analyzing the captured image using the artificial intelligence processor.

9. The operating method of claim 8, wherein the transmitting of the result information according to the analysis of the received image together with the identifier of the one of the non-artificial intelligence cameras (131, 132, ... 13n) to the external device through the network (50) includes transmitting the captured image, first metadata, and second metadata to the external device, the first metadata includes result information according to the analysis of the captured image, and the second metadata includes the result information according to the analysis of the received image and the identifier of the one of the non-artificial intelligence cameras (131, 132, ... 13n).

10. The operating method of claim 1, wherein the configuring of the cluster includes:
receiving the registration information of the other artificial intelligence cameras (121, 122, 123) from a user terminal; and
configuring the cluster by performing communication with the other artificial intelligence cameras (121, 122, 123) using the received registration information.

11. The operating method of claim 1, wherein the sharing of the registration information of the non-artificial intelligence cameras (131, 132, ... 13n) with the other artificial intelligence cameras (121, 122, 123) includes:
receiving the registration information of the non-artificial intelligence cameras (131, 132, ... 13n) from a user terminal; and
providing the received registration information to the other artificial intelligence cameras (121, 122, 123).

12. An artificial intelligence camera comprising:
an optical system;
a processor configured to process an image generated according to light received through the optical system;
an artificial intelligence processor configured to operate in response to control of the processor and analyze the processed image on the basis of a deep learning method; and
a network interface providing communication through a network (50), wherein the processor is configured to
configure a cluster for an object and pattern recognition and similarity inspection between objects together with external artificial intelligence cameras (121, 122, 123) using registration information of the external artificial intelligence cameras (121, 122, 123), wherein the cluster refers to a plurality of artificial intelligence cameras (121, 122, 123) which are configured to receive registration information of an additional artificial intelligence camera (121, 122, 123) when the additional artificial intelligence camera (121, 122, 123) is added to the cluster, wherein registration information is information for accessing one of the artificial intelligence cameras (121, 122, 123),
share registration information of non-artificial intelligence cameras (131, 132, ... 13n) with the external artificial intelligence cameras (121, 122, 123) so as to access the non-artificial intelligence cameras (131, 132, ... 13n) through the network (50),
receive, when one of the non-artificial intelligence cameras (131, 132, ... 13n) is allocated, an image captured by the allocated one of the non-artificial intelligence cameras (131, 132, ... 13n) by accessing the allocated one of the non-artificial intelligence cameras (131, 132, ... 13n),
command the artificial intelligence processor to analyze the received image, and
transmit result information according to the analysis of the received image together with an identifier of the allocated one of the non-artificial intelligence cameras (131, 132, ... 13n) to an external device through the network (50).

13. The camera of claim 12, wherein the processor is configured to access an additional artificial intelligence camera (121, 122, 123) according to registration information of the additional artificial intelligence camera (121, 122, 123) to add the additional artificial intelligence camera (121, 122, 123) to the cluster, when the registration information of the additional artificial intelligence camera (121, 122, 123) is received.

14. The camera of claim 12, wherein the processor is configured to communicate with the external artificial intelligence cameras (121, 122, 123) to determine any one of cameras of the cluster as a master node of the cluster, and the one of the allocated non-artificial intelligence cameras (131, 132, ... 13n) is determined according to a command from the master node.

## Patentansprüche

1. Betriebsverfahren für eine beliebige der Kameras mit künstlicher Intelligenz (121, 122, 123), die über ein Netzwerk (50) miteinander kommunizieren, wobei die Kameras mit künstlicher Intelligenz (121, 122, 123) jeweils einen Prozessor mit künstlicher Intelligenz umfassen, der dazu konfiguriert ist, eine Objekt- und Mustererkennung und eine Ähnlichkeitsprüfung zwischen Objekten unter Verwendung eines Deep-Learning-Verfahrens durchzuführen, wobei das Verfahren Folgendes umfasst:
Konfigurieren eines Clusters für die Objekt- und Mustererkennung und die Ähnlichkeitsprüfung zwischen Objekten zusammen mit weiteren Kameras mit künstlicher Intelligenz (121, 122, 123) unter Verwendung von Registrierungsinformationen der weiteren Kameras mit künstlicher Intelligenz (121, 122, 123), wobei sich der Cluster auf eine Vielzahl von Kameras mit künstlicher Intelligenz bezieht, die dazu konfiguriert sind, Registrierungsinformationen einer zusätzlichen Kamera mit künstlicher Intelligenz (121, 122, 123) zu empfangen, wenn die zusätzliche Kamera mit künstlicher Intelligenz (121, 122, 123) dem Cluster hinzugefügt wird, wobei Registrierungsinformationen Informationen für den Zugriff auf die Kameras mit künstlicher Intelligenz (121, 122, 123) sind;
Teilen von Registrierungsinformationen von Kameras ohne künstliche Intelligenz (131, 132,... 13n) mit den weiteren Kameras mit künstlicher Intelligenz (121, 122, 123), um über das Netzwerk (50) auf die Kameras ohne künstliche Intelligenz (131, 132,... 13n) zuzugreifen;
Empfangen, wenn eine der Kameras ohne künstliche Intelligenz (131, 132,... 13n) zugewiesen ist, eines von der zugewiesenen der Kameras ohne künstliche Intelligenz (131, 132,... 13n) aufgenommenen Bildes durch Zugriff auf die zugewiesene der Kameras ohne künstliche Intelligenz (131, 132,... 13n);
Analysieren des empfangenen Bildes unter Verwendung des Prozessors mit künstlicher Intelligenz mindestens einer der Kameras mit künstlicher Intelligenz (121, 122, 123); und
Übertragen von Ergebnisinformationen entsprechend der Analyse des empfangenen Bildes zusammen mit einem Identifikator der zugewiesenen der Kameras ohne künstliche Intelligenz (131, 132,... 13n) über das Netzwerk (50) an eine externe Vorrichtung.

2. Betriebsverfahren nach Anspruch 1, wobei das Konfigurieren des Clusters das Kommunizieren mit den weiteren Kameras mit künstlicher Intelligenz (121, 122, 123) umfasst, um eine beliebige der Kameras mit künstlicher Intelligenz (121, 122, 123) als Master-Knoten des Clusters zu bestimmen, und die eine der Kameras ohne künstliche Intelligenz (131, 132,... 13n) gemäß einem Befehl vom Master-Knoten bestimmt wird.

3. Betriebsverfahren nach Anspruch 1, wobei das Empfangen des aufgenommenen Bildes Folgendes umfasst:
Empfangen eines von der einen der Kameras ohne künstliche Intelligenz (131, 132,... 13n) erzeugten Ereignisalarmsignals; und
Auffordern der einen der Kameras ohne künstliche Intelligenz (131, 132,... 13n), als Reaktion auf das Ereignisalarmsignal das aufgenommene Bild bereitzustellen.

4. Betriebsverfahren nach Anspruch 3, wobei das Konfigurieren des Clusters das Kommunizieren mit den weiteren Kameras mit künstlicher Intelligenz (121, 122, 123) umfasst, um eine beliebige der Kameras mit künstlicher Intelligenz (121, 122, 123) als Master-Knoten des Clusters zu bestimmen, und das Ereignisalarmsignal über den Master-Knoten empfangen wird.

5. Betriebsverfahren nach Anspruch 3, wobei das Empfangen des aufgenommenen Bildes ferner das Ändern einer Einstellung der einen der Kameras ohne künstliche Intelligenz (131, 132,... 13n) auf einen vorbestimmten Einstellwert als Reaktion auf das Ereignisalarmsignal umfasst, bevor die eine der Kameras ohne künstliche Intelligenz (131, 132,... 13n) aufgefordert wird, das aufgenommene Bild bereitzustellen.

6. Betriebsverfahren nach Anspruch 1, wobei beim Empfangen des von der einen der Kameras ohne künstliche Intelligenz (131, 132,... 13n) aufgenommenen Bildes eine Länge des von der einen der Kameras ohne künstliche Intelligenz (131, 132,... 13n) empfangenen Bildes variabel angepasst wird, je nachdem, ob eine Wahrscheinlichkeit gemäß Deep Learning einem Schwellenwert oder mehr entspricht oder nicht, wenn das empfangene Bild unter Verwendung des Prozessors mit künstlicher Intelligenz analysiert wird.

7. Betriebsverfahren nach Anspruch 1, umfassend ferner:
Austauschen von Statusmeldungen mit den weiteren Kameras mit künstlicher Intelligenz (121, 122, 123); zusätzliches Empfangen von Bildern, die von weiteren Kameras ohne künstliche Intelligenz (131, 132,... 13n) aufgenommen werden, an die weiteren Kameras mit künstlicher Intelligenz (121, 122, 123) durch Zugriff auf die weiteren Kameras ohne künstliche Intelligenz (131, 132,... 13n), wenn anhand der Statusmeldungen festgestellt wird, dass die weiteren Kameras mit künstlicher Intelligenz (121, 122, 123) abnormal sind;
Analysieren der zusätzlich empfangenen Bilder unter Verwendung des Prozessors mit künstlicher Intelligenz; und
Übertragen von Ergebnisinformationen entsprechend der Analyse der zusätzlich empfangenen Bilder zusammen mit Identifikatoren der weiteren Kameras ohne künstliche Intelligenz (131, 132,... 13n) über das Netzwerk (50) an die externe Vorrichtung.

8. Betriebsverfahren nach Anspruch 1, wobei die Kamera mit künstlicher Intelligenz (121, 122, 123) ferner einen Bildsensor umfasst und
das Verfahren ferner Folgendes umfasst:
Aufnehmen eines Bildes mittels des Bildsensors; und
Analysieren des aufgenommenen Bildes unter Verwendung des Prozessors mit künstlicher Intelligenz.

9. Betriebsverfahren nach Anspruch 8, wobei das Übertragen der Ergebnisinformationen entsprechend der Analyse des empfangenen Bildes zusammen mit dem Identifikator der einen der Kameras ohne künstliche Intelligenz (131, 132,... 13n) über das Netzwerk (50) an die externe Vorrichtung das Senden des aufgenommenen Bildes, erster Metadaten und zweiter Metadaten an die externe Vorrichtung umfasst, wobei die ersten Metadaten Ergebnisinformationen entsprechend der Analyse des aufgenommenen Bildes und die zweiten Metadaten die Ergebnisinformationen entsprechend der Analyse des empfangenen Bildes und den Identifikator der einen der Kameras ohne künstliche Intelligenz (131, 132,... 13n) umfassen.

10. Betriebsverfahren nach Anspruch 1, wobei das Konfigurieren des Clusters Folgendes umfasst:
Empfangen der Registrierungsinformationen der weiteren Kameras mit künstlicher Intelligenz (121, 122, 123) von einem Benutzerendgerät; und
Konfigurieren des Clusters durch Durchführen einer Kommunikation mit den weiteren Kameras mit künstlicher Intelligenz (121, 122, 123) unter Verwendung der empfangenen Registrierungsinformationen.

11. Betriebsverfahren nach Anspruch 1, wobei das Teilen der Registrierungsinformationen der Kameras ohne künstliche Intelligenz (131, 132,... 13n) mit den weiteren Kameras mit künstlicher Intelligenz (121, 122, 123) Folgendes umfasst:
Empfangen der Registrierungsinformationen der Kameras ohne künstliche Intelligenz (131, 132,... 13n) von einem Benutzerendgerät; und
Bereitstellen der empfangenen Registrierungsinformationen an die weiteren Kameras mit künstlicher Intelligenz (121, 122, 123).

12. Kamera mit künstlicher Intelligenz, umfassend:
ein optisches System;
einen Prozessor, der dazu konfiguriert ist, ein Bild zu verarbeiten, das entsprechend dem durch das optische System empfangenen Licht erzeugt wird;
einen Prozessor mit künstlicher Intelligenz, der dazu konfiguriert ist, als Reaktion auf die Steuerung durch den Prozessor zu arbeiten und das verarbeitete Bild auf der Grundlage eines Deep-Learning-Verfahrens zu analysieren; und
eine Netzwerkschnittstelle, die eine Kommunikation über ein Netzwerk (50) bereitstellt, wobei der Prozessor dazu konfiguriert ist,
einen Cluster für eine Objekt- und Mustererkennung und eine Ähnlichkeitsprüfung zwischen Objekten gemeinsam mit externen Kameras mit künstlicher Intelligenz (121, 122, 123) unter Verwendung von Registrierungsinformationen der externen Kameras mit künstlicher Intelligenz (121, 122, 123) zu konfigurieren, wobei sich der Cluster auf eine Vielzahl von Kameras mit künstlicher Intelligenz (121, 122, 123) bezieht, die dazu konfiguriert sind, Registrierungsinformationen einer zusätzlichen Kamera mit künstlicher Intelligenz (121, 122, 123) zu empfangen, wenn die zusätzliche Kamera mit künstlicher Intelligenz (121, 122, 123) dem Cluster hinzugefügt wird, wobei Registrierungsinformationen Informationen für den Zugriff auf eine der Kameras mit künstlicher Intelligenz (121, 122, 123) sind,
Registrierungsinformationen von Kameras ohne künstliche Intelligenz (131, 132,... 13n) mit den externen Kameras mit künstlicher Intelligenz (121, 122, 123) zu teilen, um über das Netzwerk (50) auf die Kameras ohne künstliche Intelligenz (131, 132,... 13n) zuzugreifen,
wenn eine der Kameras ohne künstliche Intelligenz (131, 132,... 13n) zugewiesen ist, ein von der zugewiesenen der Kameras ohne künstliche Intelligenz (131, 132,... 13n) aufgenommenes Bild durch Zugriff auf die zugewiesene der Kameras ohne künstliche Intelligenz (131, 132,... 13n) zu empfangen,
den Prozessor mit künstlicher Intelligenz anzuweisen, das empfangene Bild zu analysieren, und
Ergebnisinformationen entsprechend der Analyse des empfangenen Bildes zusammen mit einem Identifikator der zugewiesenen der Kameras ohne künstliche Intelligenz (131, 132,... 13n) über das Netzwerk (50) an eine externe Vorrichtung zu übertragen.

13. Kamera nach Anspruch 12, wobei der Prozessor dazu konfiguriert ist, auf eine zusätzliche Kamera mit künstlicher Intelligenz (121, 122, 123) gemäß Registrierungsinformationen der zusätzlichen Kamera mit künstlicher Intelligenz (121, 122, 123) zuzugreifen, um die zusätzliche Kamera mit künstlicher Intelligenz (121, 122, 123) dem Cluster hinzuzufügen, wenn die Registrierungsinformationen der zusätzlichen Kamera mit künstlicher Intelligenz (121, 122, 123) empfangen werden.

14. Kamera nach Anspruch 12, wobei der Prozessor dazu konfiguriert ist, mit den externen Kameras mit künstlicher Intelligenz (121, 122, 123) zu kommunizieren, um eine beliebige der Kameras des Clusters als Master-Knoten des Clusters zu bestimmen, und
die eine der zugewiesenen Kameras ohne künstliche Intelligenz (131, 132,... 13n) gemäß einem Befehl vom Master-Knoten bestimmt wird.

## Revendications

1. Procédé de fonctionnement pour l'une quelconque de caméras d'intelligence artificielle (121, 122, 123) qui communiquent entre elles par l'intermédiaire d'un réseau (50), les caméras d'intelligence artificielle (121, 122, 123) comprenant chacune un processeur d'intelligence artificielle configuré pour effectuer une reconnaissance d'objets et de motifs et une inspection de similarité entre des objets à l'aide d'un procédé d'apprentissage profond, le procédé de fonctionnement comprenant:
la configuration d'une grappe pour la reconnaissance d'objets et de motifs et l'inspection de similarité entre des objets conjointement avec d'autres caméras d'intelligence artificielle (121, 122, 123) à l'aide d'informations d'enregistrement des autres caméras d'intelligence artificielle (121, 122, 123), dans lequel la grappe désigne une pluralité de caméras d'intelligence artificielle qui sont configurées pour recevoir des informations d'enregistrement d'une caméra d'intelligence artificielle supplémentaire (121, 122, 123) lorsque la caméra d'intelligence artificielle supplémentaire (121, 122, 123) est ajoutée à la grappe, dans lequel les informations d'enregistrement sont des informations permettant d'accéder aux caméras d'intelligence artificielle (121, 122, 123);
le partage d'informations d'enregistrement de caméras sans intelligence artificielle (131, 132,... 13n) avec les autres caméras d'intelligence artificielle (121, 122, 123) de manière à accéder aux caméras sans intelligence artificielle (131, 132,... 13n) par l'intermédiaire du réseau (50);
la réception, lorsque l'une des caméras sans intelligence artificielle (131, 132,... 13n) est attribuée, d'une image capturée par celle attribuée parmi les caméras sans intelligence artificielle (131, 132,... 13n) en accédant à celle attribuée parmi les caméras sans intelligence artificielle (131, 132,... 13n);
l'analyse de l'image reçue à l'aide du processeur d'intelligence artificielle d'au moins l'une des caméras d'intelligence artificielle (121, 122, 123); et
la transmission d'informations de résultat selon l'analyse de l'image reçue conjointement avec un identifiant de celle attribuée parmi les caméras sans intelligence artificielle (131, 132,... 13n) à un dispositif externe par l'intermédiaire du réseau (50).

2. Procédé de fonctionnement selon la revendication 1, dans lequel la configuration de la grappe comprend la communication avec les autres caméras d'intelligence artificielle (121, 122, 123) pour déterminer l'une quelconque des caméras d'intelligence artificielle (121, 122, 123) en tant que nœud maître de la grappe, et celle parmi les caméras sans intelligence artificielle (131, 132,... 13n) est déterminée selon une commande provenant du nœud maître.

3. Procédé de fonctionnement selon la revendication 1, dans lequel la réception de l'image capturée comprend:
la réception d'un signal d'alarme d'événement généré par celle parmi les caméras sans intelligence artificielle (131, 132,... 13n); et
la demande à celle parmi les caméras sans intelligence artificielle (131, 132,... 13n) de fournir l'image capturée en réponse au signal d'alarme d'événement.

4. Procédé de fonctionnement selon la revendication 3, dans lequel la configuration de la grappe comprend la communication avec les autres caméras d'intelligence artificielle (121, 122, 123) pour déterminer l'une quelconque des caméras d'intelligence artificielle (121, 122, 123) en tant que nœud maître de la grappe, et le signal d'alarme d'événement est reçu par l'intermédiaire du nœud maître.

5. Procédé de fonctionnement selon la revendication 3, dans lequel la réception de l'image capturée comprend en outre la modification d'un réglage de celle parmi les caméras sans intelligence artificielle (131, 132,... 13n) en une valeur de réglage prédéterminée en réponse au signal d'alarme d'événement avant de demander à celle parmi les caméras sans intelligence artificielle (131, 132,... 13n) de fournir l'image capturée.

6. Procédé de fonctionnement selon la revendication 1, dans lequel, lors de la réception de l'image capturée par celle parmi les caméras sans intelligence artificielle (131, 132,... 13n), une longueur de l'image reçue de celle parmi les caméras sans intelligence artificielle (131, 132,... 13n) est ajustée de manière variable selon qu'une probabilité selon l'apprentissage profond est ou non supérieure ou égale à une valeur seuil lorsque l'image reçue est analysée à l'aide du processeur d'intelligence artificielle.

7. Procédé de fonctionnement selon la revendication 1, comprenant en outre:
la communication de messages d'état avec les autres caméras d'intelligence artificielle (121, 122, 123); la réception supplémentaire d'images capturées par d'autres caméras sans intelligence artificielle (131, 132,... 13n) attribuées aux autres caméras d'intelligence artificielle (121, 122, 123) en accédant aux autres caméras sans intelligence artificielle (131, 132,... 13n) lorsque les autres caméras d'intelligence artificielle (121, 122, 123) sont déterminées comme étant anormales sur la base des messages d'état;
l'analyse des images reçues en supplément à l'aide du processeur d'intelligence artificielle; et
la transmission d'informations de résultat selon l'analyse des images reçues en supplément conjointement avec des identifiants des autres caméras sans intelligence artificielle (131, 132,... 13n) au dispositif externe par l'intermédiaire du réseau (50).

8. Procédé de fonctionnement selon la revendication 1, dans lequel la caméra d'intelligence artificielle (121, 122, 123) comprend en outre un capteur d'image, et
le procédé de fonctionnement comprend en outre:
la capture d'une image par l'intermédiaire du capteur d'image; et
l'analyse de l'image capturée à l'aide du processeur d'intelligence artificielle.

9. Procédé de fonctionnement selon la revendication 8, dans lequel la transmission des informations de résultat selon l'analyse de l'image reçue conjointement avec l'identifiant de celle parmi les caméras sans intelligence artificielle (131, 132,... 13n) au dispositif externe par l'intermédiaire du réseau (50) comprend la transmission de l'image capturée, de premières métadonnées et de secondes métadonnées au dispositif externe, les premières métadonnées comprennent des informations de résultat selon l'analyse de l'image capturée, et les secondes métadonnées comprennent les informations de résultat selon l'analyse de l'image reçue et l'identifiant de celle parmi les caméras sans intelligence artificielle (131, 132,... 13n).

10. Procédé de fonctionnement selon la revendication 1, dans lequel la configuration de la grappe comprend:
la réception des informations d'enregistrement des autres caméras d'intelligence artificielle (121, 122, 123) depuis un terminal utilisateur; et
la configuration de la grappe en effectuant une communication avec les autres caméras d'intelligence artificielle (121, 122, 123) à l'aide des informations d'enregistrement reçues.

11. Procédé de fonctionnement selon la revendication 1, dans lequel le partage des informations d'enregistrement des caméras sans intelligence artificielle (131, 132,... 13n) avec les autres caméras d'intelligence artificielle (121, 122, 123) comprend:
la réception des informations d'enregistrement des caméras sans intelligence artificielle (131, 132,... 13n) depuis un terminal utilisateur; et
la fourniture des informations d'enregistrement reçues aux autres caméras d'intelligence artificielle (121, 122, 123).

12. Caméra d'intelligence artificielle comprenant:
un système optique;
un processeur configuré pour traiter une image générée selon de la lumière reçue par l'intermédiaire du système optique;
un processeur d'intelligence artificielle configuré pour fonctionner en réponse à une commande du processeur et analyser l'image traitée sur la base d'un procédé d'apprentissage profond; et
une interface réseau fournissant une communication par l'intermédiaire d'un réseau (50), dans laquelle le processeur est configuré pour
configurer une grappe pour une reconnaissance d'objets et de motifs et une inspection de similarité entre des objets conjointement avec des caméras d'intelligence artificielle externes (121, 122, 123) à l'aide d'informations d'enregistrement des caméras d'intelligence artificielle externes (121, 122, 123), dans laquelle la grappe désigne une pluralité de caméras d'intelligence artificielle (121, 122, 123) qui sont configurées pour recevoir des informations d'enregistrement d'une caméra d'intelligence artificielle supplémentaire (121, 122, 123) lorsque la caméra d'intelligence artificielle supplémentaire (121, 122, 123) est ajoutée à la grappe, dans laquelle les informations d'enregistrement sont des informations permettant d'accéder à l'une des caméras d'intelligence artificielle (121, 122, 123),
partager des informations d'enregistrement de caméras sans intelligence artificielle (131, 132,... 13n) avec les caméras d'intelligence artificielle externes (121, 122, 123) de manière à accéder aux caméras sans intelligence artificielle (131, 132,... 13n) par l'intermédiaire du réseau (50),
recevoir, lorsque l'une des caméras sans intelligence artificielle (131, 132,... 13n) est attribuée, une image capturée par celle attribuée parmi les caméras sans intelligence artificielle (131, 132,... 13n) en accédant à celle attribuée parmi les caméras sans intelligence artificielle (131, 132,... 13n),
commander au processeur d'intelligence artificielle d'analyser l'image reçue, et
transmettre des informations de résultat selon l'analyse de l'image reçue conjointement avec un identifiant de celle attribuée parmi les caméras sans intelligence artificielle (131, 132,... 13n) à un dispositif externe par l'intermédiaire du réseau (50).

13. Caméra selon la revendication 12, dans laquelle le processeur est configuré pour accéder à une caméra d'intelligence artificielle supplémentaire (121, 122, 123) selon des informations d'enregistrement de la caméra d'intelligence artificielle supplémentaire (121, 122, 123) afin d'ajouter la caméra d'intelligence artificielle supplémentaire (121, 122, 123) à la grappe, lorsque les informations d'enregistrement de la caméra d'intelligence artificielle supplémentaire (121, 122, 123) sont reçues.

14. Caméra selon la revendication 12, dans laquelle le processeur est configuré pour communiquer avec les caméras d'intelligence artificielle externes (121, 122, 123) afin de déterminer l'une quelconque des caméras de la grappe en tant que nœud maître de la grappe, et
celle parmi les caméras sans intelligence artificielle attribuées (131, 132,... 13n) est déterminée selon une commande provenant du nœud maître.
